# EUROPÄISCHE PATENTSCHRIFT

(11) **EP 2 355 998 B1**
(45) Veröffentlichungstag und Bekanntmachung des Hinweises auf die Patenterteilung: **15.08.2012**
(21) Anmeldenummer: 09778498.7
(22) Anmeldetag: 12.09.2009
(51) Int. Cl.: B60R 22/195

(54) **SICHERHEITSGURTANORDNUNG IN KRAFTFAHRZEUGEN**
SEATBELT ARRANGEMENT IN MOTOR VEHICLES
AGENCEMENT DE CEINTURE DE SÉCURITÉ POUR VÉHICULES AUTOMOBILES

(30) Priorität: 13.11.2008 DE 102008057124
(43) Veröffentlichungstag der Anmeldung: 17.08.2011
(73) Patentinhaber: Volkswagen Aktiengesellschaft, 38440 Wolfsburg (DE)
(72) Erfinder: MÖKER, Carsten, 38471 Rühen (DE); GRUTZECK, Stefan, 38102 Braunschweig (DE)
(86) Internationale Anmeldenummer: PCT/EP2009/006623
(87) Internationale Veröffentlichungsnummer: WO 2010/054713

(56) Entgegenhaltungen:
- EP-A- 0 640 516
- DE-A1- 10 105 500
- DE-A1- 19 960 848
- DE-U- 7 134 965
- FR-A- 2 862 033
- GB-A- 1 407 954
- JP-A- 2006 199 197
- JP-A- 2006 199 198

## Beschreibung

Die Erfindung betrifft eine Sicherheitsgurtanordnung in Kraftfahrzeugen gemäß dem Oberbegriff des Patentanspruches 1.

Es sind Rückhaltesysteme an Vordersitzen in Kraftfahrzeugen mit einem Dreipunkt-Sicherheitsgurt bekannt, die u.a. Gurtstrammer nicht nur am Schultergurtabschnitt, sondern auch am äußeren Anlenkpunkt des Beckengurtabschnittes vorsehen.

Eine solche Doppelstraffung (Schulter- und Endbeschlagstraffung) wird zunehmend von den Automobilherstellern aufgrund besserer biomechanischen Insassenwerte (Brustbeschleunigung, Brustdeflexion) sowie der Vermeidung eines Kniekontaktes zur Schalttafel in allen Fahrzeuggrößen berücksichtigt. In diesem Fall ist der herkömmliche Endbeschlag durch ein pyrotechnisch entzündbaren Endbeschlagstraffer ersetzt, der im Crashfall Gurtlose aus dem Beckengurtanteil zieht und die Beckenvorverlagerung reduziert und somit die Insassenkinematik positiv beeinflusst. Die Schulterstraffung erfolgt wie üblich, allerdings sollten Schulter- und Endbeschlagstraffer zeitversetzt gezündet werden.

Zurzeit ist das folgende Endbeschlagstrafferkonzept bekannt, wonach prinzipiell ein umgebauter Schlossstraffer im Einsatz ist. Die Koppelstelle zwischen dem Beckengurt und dem Endbeschlagstraffer befindet sich sichtbar im Fahrzeug. Die Straffereinheit ist unter der Schwellerverkleidung positioniert.

Aus der FR 2 862 033 A ist eine gattungsgemäße Sicherheitsgurtanordnung bekannt, bei der ein Sicherheitsgurt einen Schultergurtabschnitt und einen Beckengurtabschnitt aufweist. Der Beckengurtabschnitt ist an seinem äußeren Anlenkpunkt im Bereich eines Schwellers des Kraftfahrzeuges an einem Gurtstrammer gehalten, der über eine Verbindungseinrichtung mit dem Beckengurtabschnitt verbunden ist. Die Verbindungseinrichtung ist sichtgeschützt unter einer Schwellerverkleidung angeordnet. Derartige Sicherheitsgurtanordnungen sind auch aus der JP 2006 199197 A, JP 2006 199198 A, DE 199 60 848 A1 und aus der DE 101 05 500 A1 bekannt.

Die Aufgabe der Erfindung ist es, eine Sicherheitsgurtanordnung vorzuschlagen, die betriebssicher ausgebildet ist.

Diese Aufgabe wird erfindungsgemäß mit den Merkmalen des Patentanspruches 1 gelöst. vorteilhafte und zweckmäßige Weiterbildungen der Erfindung sind in den Unteransprüchen angeführt.

Gemäß dem oberbegriff des Patentanspruches 1 ist die Koppelstelle unter der Schwellerverkleidung verdeckt angeordnet. Der pyrotechnisch aktivierbare Gurtstrammer des Beckengurtes kann dabei am seitlichen Schweller der Karosserie des Kraftfahrzeuges befestigt und an der Koppelstelle über eine Verbindungseinrichtung mit dem Beckengurt verbunden sein. Erfindungsgemäß ist daher der Gurtstrammer zusammen mit der Verbindungseinrichtung hinter einer am Schweller vorgesehenen Abdeckung positioniert. Der Beckengurt kann über einen Führungsschlitz in der Abdeckung und ein Umlenkteil mit dem beweglichen Strammerteil des Gurtstrammers gekoppelt sein.

Mit der verdeckten Anordnung der Koppelstelle wird der Innenraum in der Anmutung nicht durch die Koppel-/Fügestelle gestört. Der Kunde sieht wie beim konventionellen Gurtsystem nur den Gurt im Innenraum. Ein weiterer Vorteil ist, dass die Zugänglichkeit zur Sitzlehnenverstellung nicht eingeschränkt wird, zum Beispiel beim Handfreigang zum Verstellen der Lehnenneigung. Bei diesem Konzept wird der Gurt aus dem Innenraum kommend durch die Schwellerverkleidung geführt und dann mittels eines Umlenkers in Richtung Koppelstelle bzw. Straffereinheit geführt.

Das Zusammenfügen eines solchen Endbeschlagstraffers mit dem Beckengurt unterhalb der Schwellerverkleidung ist allerdings mit hohem Montageaufwand verbunden. Aufgrund der sichtgeschützten Anordnung der Koppelstelle hinter der Schwellerverkleidung kann sich ein einfaches, prozesssicheres Zusammenfügen schwierig gestalten.

Für ein einfaches Zusammenfügen des Endbeschlagstraffers mit dem Beckengurt ist erfindungsgemäß die Verbindungseinrichtung eine Bajonettverbindung mit einem gurtseitigen Kupplungsteil und einem gurtstrammerseitigen Kupplungsteil sein. Eine derartige Bajonettverbindung ist im Hinblick auf den begrenzten Bauraum unter der Schwellerverkleidung äußerst kompakt ausführbar. Dabei kann das gurtseitige Kupplungsteil so bemessensein, dass es beim Zusammenbau durch den Führungsschlitz der Abdeckung einfädelbar ist. Dadurch kann der Beckengurtabschnitt mit dem einen Kupplungsteil durch den Führungsschlitz der Abdeckung und das Umlenkteil hindurchgeführt und über die Bajonettverbindung in einfacher, montagegünstiger Weise mit dem ortsfesten Gurtstrammer gekoppelt werden.

In besonders vorteilhafter Weiterbildung der Erfindung kann ferner die Bajonettverbindung mittels eines Sperrgliedes in der Betriebsstellung verriegelbar sein. Damit ist bei baulich geringem Mehraufwand sichergestellt, dass die Verbindung zwischen Beckengurtabschnitt und beweglichem Strammerteil des Gurtstrammers zuverlässig aufrechterhalten bleibt bzw. sich nicht im täglichen Fahrbetrieb des Kraftfahrzeuges unbeabsichtigt lösen kann.

In baulich und fertigungstechnisch günstiger Weise kann des weiteren die Bajonettverbindung durch zwei stiftförmige, am Strammerteil und am Beckengurtende vorgesehene Kupplungsteile gebildet sein, die in zum Beispiel 90° zueinander abgewinkelter Position formschlüssig zusammenfügbar und in gestreckter Position verriegelbar sind. In der gestreckten Position können zudem die von dem aktivierten Gurtstrammer ausgeübten Zugkräfte im Crashfalle problemlos übertragen werden.

Ferner kann das Sperrglied eine auf einem Kupplungsteil axial verschiebbare Hülse sein, die in der gestreckten Position der Kupplungsteile auf das zweite Kupplungsteil aufschiebbar ist. Somit ist eine besonders prozesssichere Montage erzielt, da die besagte Hülse auf das zweite Kupplungsteil nur aufschiebbar ist, wenn die beiden Kupplungsteile der Bajonettverbindung ordnungsgemäß zusammengefügt und in die gestreckte Position eingestellt sind.

Mit der Sperrhülse ist in einfacher Weise sichergestellt, dass der Bajonettverschluss ordnungsgemäß verriegelt ist. Der Werker kann sofort erkennen, wenn der Verschluss nicht ordnungsgemäß verriegelt ist. Eine Scheinverriegelung ist somit ausgeschlossen. Lässt sich die Sperrhülse nicht über den Verschluss ziehen, so liegt eine Scheinverriegelung vor.

Eine montagegünstige, Zugkräfte zuverlässig übertragende Konstruktion sieht des weiteren vor, dass an den Kupplungsteilen der Verbindungseinrichtung ein zentrischer, quer zur Längsachse ausgerichteter Führungszapfen und diametral gegenüber liegende kreissegmentförmige Rastzungen angeordnet sind, die mit einer korrespondierenden Lagerbohrung und mit korrespondierenden schlitzförmigen Führungsnuten in der gestreckten Position formschlüssig zusammenwirken.

Dabei können ferner die an den Kupplungsteilen angeformten Rastzungen zur Ebene der Abflachungen abgestuft versetzt sein, wodurch eine zusätzliche Verankerung der Bajonettverbindung in Belastungsrichtung bzw. eine gesteigerte Übertragbarkeit von Zugkräften über die Kupplungsteile erzielt ist.

Schließlich können in bevorzugter Ausgestaltung der Erfindung der Gurtstrammer bei einem viertürigen Kraftfahrzeug seitlich des korrespondierenden Vordersitzes und vor dem Umlenkteil am Schweller angeordnet sein, während der Gurtstrammer bei einem zweitürigen Kraftfahrzeug hinter dem korrespondierendem Vordersitz und hinter dem Umlenkteil am Schweller angeordnet ist. Damit kann vermehrt den unterschiedlichen Einbauverhältnissen zur günstigen Anordnung des Gurtstrammers einerseits und zur Erzielung eines günstigen Beckengurtverlaufes unter Berücksichtigung eines Einstiegsfreiraumes in den Fahrzeugfond bei zweitürigen Kraftfahrzeugen Rechnung getragen werden.

Ein Ausführungsbeispiel der Erfindung ist im folgenden mit weiteren Einzelheiten näher erläutert. Die schematische Zeichnung zeigt in:
- Fig. 1: eine teilweise Ansicht auf einen Vordersitz eines viertürigen Personenkraftfahrzeuges im Einstiegsbereich, mit nur teilweise ersichtlichen Beckengurtabschnitt eines Dreipunkt-Sicherheitsgurtes, der über einen Führungsschlitz einer Abdeckung des seitlichen Schwellers und über ein Umlenkteil mit einem am Schweller befestigten Gurtstrammer verbunden ist;
- Fig. 2: die Anordnung nach Fig. 1, jedoch ohne Abdeckung des Schwellers mit ersichtlichem Gurtstrammer, dessen bewegliches Strammerteil über eine Bajonettverbindung mit dem Beckengurtabschnitt verbunden ist;
- Fig. 3: die beiden Kuppelteile der Bajonettverbindung im gelösten Zustand;
- Fig. 4 bis 6: die Bajonettverbindung gemäß Fig. 3 in der Montagereihenfolge "Zusammenfügen", "Verriegeln" und "Sichern mittels einer axial verschiebbaren Hülse"; und
- Fig. 7: einen Längsschnitt gemäß Linie VII - VII der Fig. 6 durch die Bajonettverbindung.

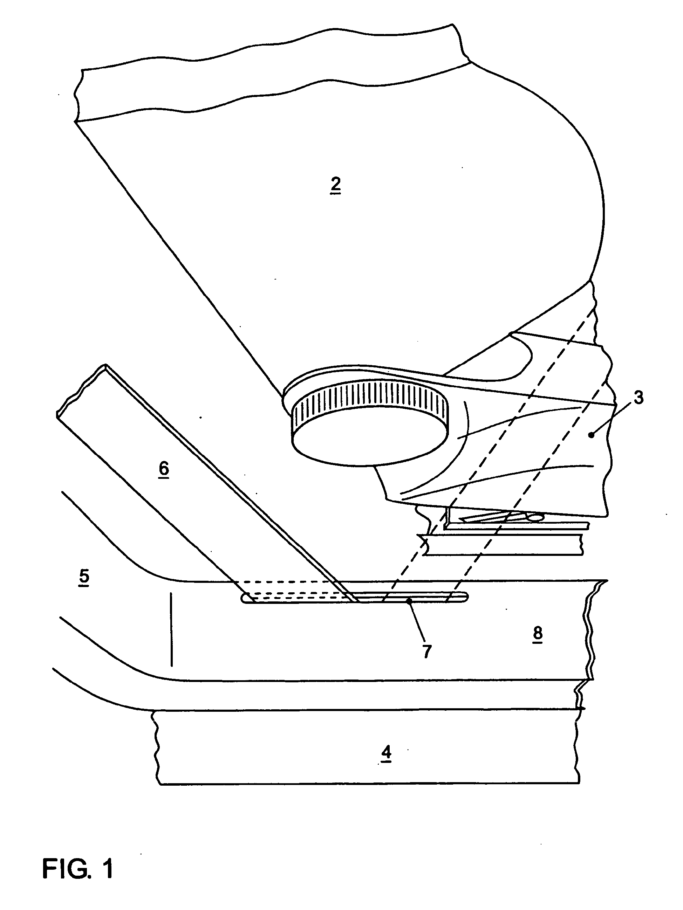

Die Fig. 1 zeigt abschnittsweise den Einstiegsbereich eines viertürigen Kraftfahrzeuges bei geöffneter vorderer Türe (nicht dargestellt) mit einem nur teilweise ersichtlichen Vordersitz 1, der eine Rückenlehne 2 und ein Sitzteil 3 aufweist.

Die gezeigte Enbeschlagstrafferanordnung ist alternativ auch in einem zweitürigen Kraftfahrzeug anwendbar. Allerdings sollte der Gurtverlauf im Ablagezustand nicht den Fondeinstieg behindern, um eine Stolpergefahr zu minimieren.

Der nur teilweise ersichtliche Einstiegsbereich ist nach unten begrenzt durch einen horizontal verlaufenden, seitlichen Schweller 4 und nach hinten durch eine etwa vertikale B-Säule 5 der Karosserie des Kraftfahrzeuges.

Das Kraftfahrzeug weist je Vordersitz 1 eine Dreipunkt-Sicherheitsgurtanordnung auf, die sich in bekannter Weise aus einem Beckengurtabschnitt 6 und einem Schultergurtabschnitt (nicht ersichtlich) zusammensetzt.

Der Schultergurtabschnitt ist etwa in Kopfhöhe eines am Vordersitz 1 sitzenden Insassen an der B-Säule 5 über einen ersten Gurtstrammer (nicht dargestellt) angelenkt.

Der Beckengurtabschnitt 6 verläuft im angegurteten Zustand (gestrichelte Linien) vom Gurtschloss an der dem Schweller 4 abgewandten Seite des Vordersitzes 1 über den Beckenbereich eines Insassen zum äußeren Anlenkpunkt am Schweller 4, wobei der Gurtabschnitt 6 durch einen Führungsschlitz 7 einer Abdeckung 8 aus Kunststoff hindurchgeführt ist.

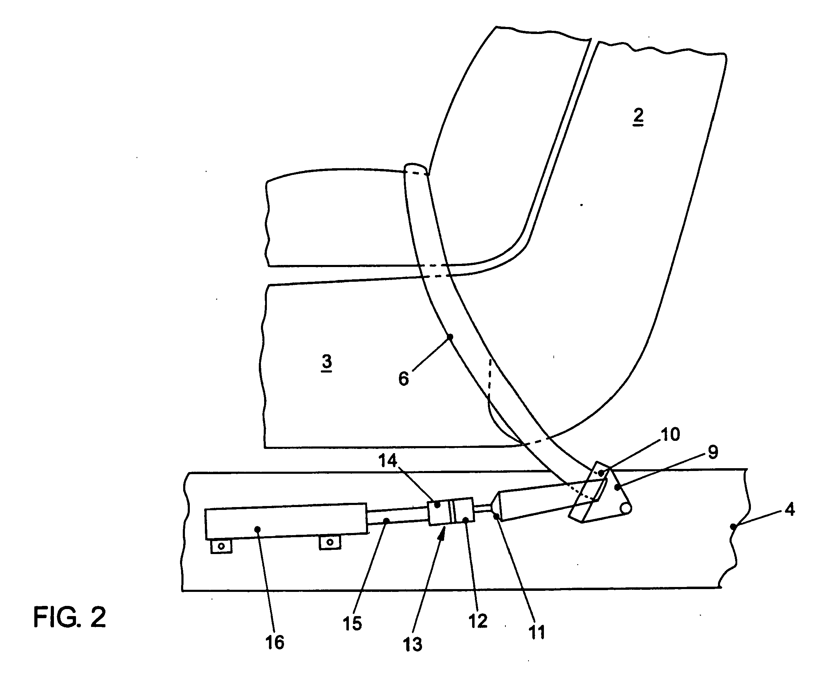

Die Fig. 2 zeigt den weiteren Verlauf des Beckengurtabschnittes 6, der unterhalb des Führungsschlitzes 7 über ein Umlenkteil 9 mit einem entsprechenden Durchlaufschlitz 10 nach vorne umgelenkt ist und an einer Öse 11 eines ersten Kupplungsteiles 12 festgelegt ist. Das Umlenkteil 9 ist schwenkbar an dem Schweller 4 angelenkt. Alternativ zur gezeigten Ausführungsform kann das Umlenkteil 9 auch als ein fester Umlenkbügel nicht schwenkbar ausgeführt sein.

Das Kupplungsteil 12 ist über eine noch zu beschreibende Bajonettverbindung 13 mit einem zweiten Kupplungsteil 14 fest verbunden, das mittels eines Seilzuges 15 mit dem beweglichen Strammerteil (z.B. ein axial verschieblicher Kolben) eines Gurtstrammers 16 fest verbunden ist.

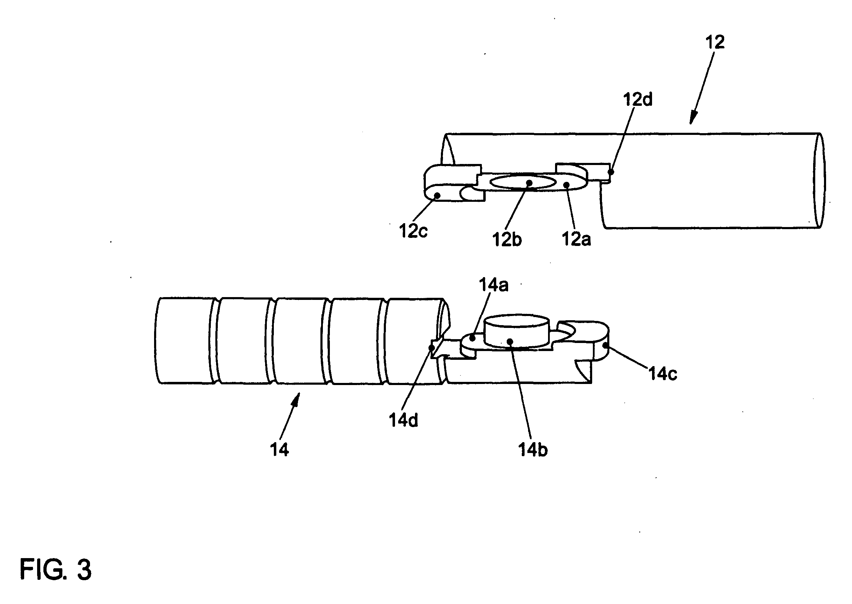

Der Gurtstrammer 16 bekannter Bauart ist an dem Schweller 4 mittels nicht näher dargestellter Schrauben befestigt und wird pyrotechnisch in einem Crashfalle des Kraftfahrzeuges aktiviert, wobei er über das Strammerteil, den Seilzug 15 und die Kupplungsteile 14, 12 den Beckengurtabschnitt 6 anzieht bzw. strammt.
Die Kupplungsteile 12 und 14 (vgl. Fig. 3) sind stiftförmig ausgeführt und weisen zwei einander zugewandte Abflachungen 12a, 14a auf, die wie folgt zu einer Bajonettverbindung 13 ausgeführt sind:
Die Abflachung 14a weist einen vorstehenden, zentrischen Führungszapfen 14b, eine radial dazu abragende, segmentförmige Rastzunge 14c und eine diametral gegenüberliegende Führungsnut 14d auf.

Demgegenüber ist die Abflachung 12a des Kupplungsteiles 12 mit einer zentrischen Lagerbohrung 12b, einer radial abragenden, segmentförmigen Rastzunge 12c und ebenfalls einer diametral gegenüberliegenden Führungsnut 12d versehen.

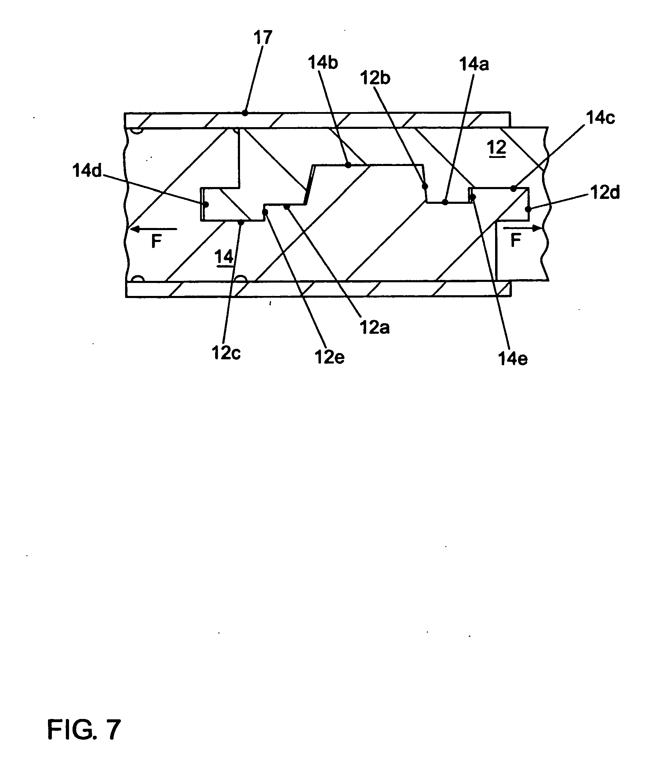

Auf das Kupplungsteil 12 ist zudem eine Hülse 17 leicht kraftschlüssig aufgesteckt, die im zurückgeschobenen Zustand die Abflachung 12a freigibt und im gesicherten Zustand die Abflachung 12a des Kupplungsteiles 12 und die Abflachung 14a des Kupplungsteiles 14 überdeckt (vgl. insbesondere Fig. 7).

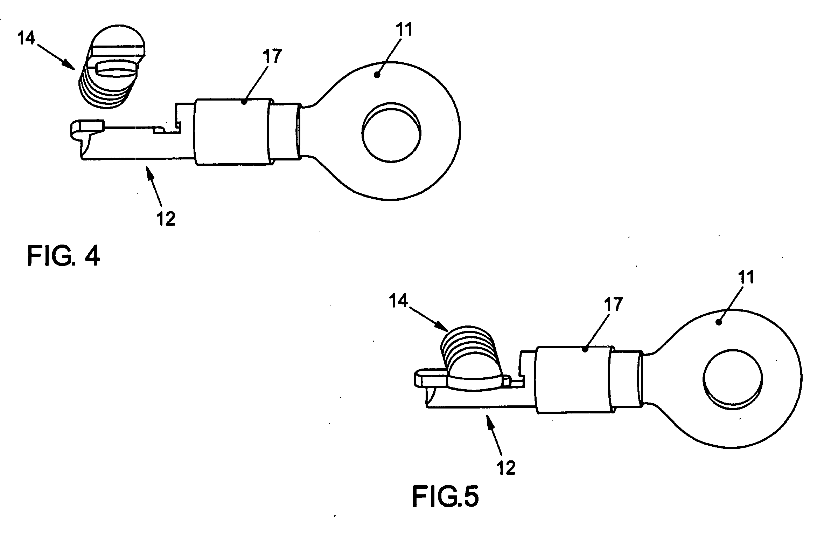

Die Fig. 4 bis 6 zeigen die Montagefolge zur Herstellung der Bajonettverbindung 13 der beiden Kupplungsteile 12, 14:
Nach dem Durchführen des Beckengurtabschnittes 6 mit dem Kupplungsteil 12 durch den Führungsschlitz 7 in der Abdeckung 8 und durch das Umlenkteil 9 wird dieses mit dem Kupplungsteil 14 verbunden.

Dazu werden die Kupplungsteile 12, 14 um 90° zueinander abgewinkelt (Fig. 4) und dann in Richtung des eingezeichneten Pfeiles zusammengefügt, wobei der Führungszapfen 14b in die Lagerbohrung 12b einfährt (Fig. 5).

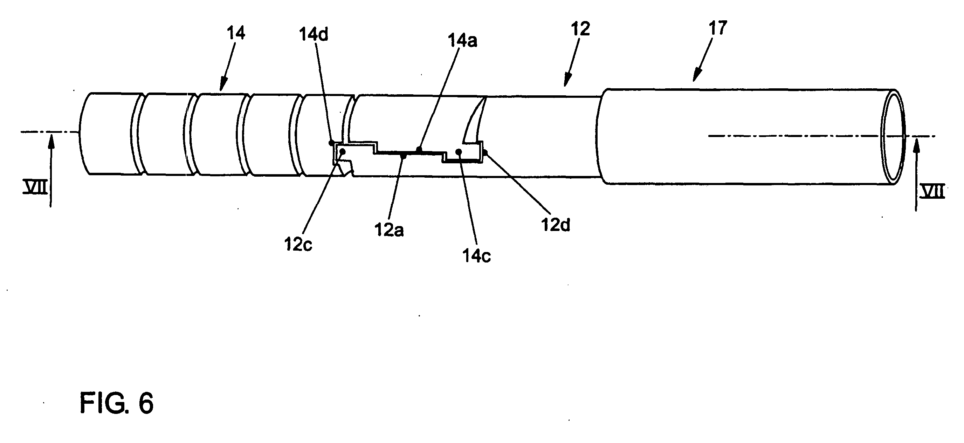

Anschließend werden die beiden Kupplungsteile 12, 14 gemäß dem eingezeichneten Pfeil in Fig. 5 zueinander verschwenkt und in die gestreckte Position (Fig. 6) verlagert, wobei jeweils die Rastzungen 12c und 14c in die Führungsnuten 12d, 14d einfahren und die Bajonettverbindung 13 herstellen.

In der gestreckten Position der Kupplungsteile 12, 14 wird die Hülse 17 über die Abflachungen 12a, 14a der Kupplungsteile 12, 14 geschoben und damit die Bajonettverbindung 13 verriegelt. Die Verriegelung ist aufgrund der passgenauen Umschließung der Kupplungsteile 12, 14 durch die Hülse 17 nur bei einer ordnungsgemäßen Verbindung der Kupplungsteile 12, 14 möglich, so dass eine Fehlmontage zuverlässig ausgeschlossen ist.

Die bei aktiviertem Gurtstrammer 16 auftretenden Zugkräfte werden von dem einen Kupplungsteil 14 über den Lagerzapfen 14b und die Rastzungen 14c, 12c auf das andere Kupplungsteil 12 übertragen, wobei die belasteten Flankenabschnitte bzw. Umfangsabschnitte in der Fig. 7 durch verdickte Linien angedeutet sind. Die Rastzungen 12c, 14c sind dazu wie ersichtlich zusätzlich aus der Ebene der Abflachungen 12a, 14a stufenförmig versetzt ausgebildet (bei 12e, 14e).

Der Gurtstrammer 16 ist, wie insbesondere aus Fig. 2 ersichtlich ist, vor dem Umlenkteil 9 und seitlich des Vordersitzes 1 am Schweller 4 angeordnet.

Bei einem zweitürigen Kraftfahrzeug mit einem entsprechend größerem Einstiegsbereich nach hinten, der den Einstieg einer Mitfahrperson in den Fond des Kraftfahrzeuges erleichtert, kann der Gurtstrammer 16 zweckmäßigerweise hinter dem Umlenkteil 9 positioniert sein und den Beckengurtabschnitt 6 im Crashfalle nach hinten strammen.

### Bezugszeichenliste

- 1: Vordersitz
- 2: Rückenlehne
- 3: Sitzteil
- 4: Schweller
- 5: B-Säule
- 6: Beckengurtabschnitt
- 7: Führungsschlitz
- 8: Abdeckung bzw. Verkleidung
- 9: Umlenkteil
- 10: Durchlaufschlitz
- 11: Öse
- 12: Kupplungsteil
- 12a: Abflachung
- 12b: Lagerbohrung
- 12c: Rastzunge
- 12d: Führungsnut
- 12e: Abstufung
- 13: Bajonettverbindung
- 14: Kupplungsteil
- 14a: Abflachung
- 14b: Lagerzapfen
- 14c: Rastzunge
- 14d: Führungsnut
- 14e: Abstufung
- 15: Zugseil
- 16: Gurtstrammer
- 17: Hülse

## Patentansprüche

1. Sicherheitsgurtanordnung in Kraftfahrzeugen, mit einem an einem Fahrzeug (1) angeordneten Sicherheitsgurt mit einem Schultergurtabschnitt und einem Beckengurtabschnitt (6), der an seinem äußeren Anlenkpunkt im Bereich eines Schwellers (4) des Kraftfahrzeuges an einem Gurtstrammer (16) gehalten ist, der über eine Verbindungseinrichtung (13) mit dem Beckengurtabschnitt (6) verbunden ist, wobei die Verbindungseinrichtung (13) sichtgeschützt unter einer Schwellerverkleidung (8) angeordnet ist, **dadurch gekennzeichnet, dass** die Verbindungseinrichtung (13) eine Bajonettverbindung mit einem gurtseitigen Kupplungsteil (12) und einem gurtstrammerseitigen Kupplungsteil (14) ist.

2. Sicherheitsgurtanordnung nach Anspruch 1, **dadurch gekennzeichnet, dass** zusätzlich ein Umlenkteil (9) sichtgeschützt unter der Schwellerverkleidung (8) vorgesehen ist, und der Beckengurtabschnitt (6) ausgehend von der Verbindungseinrichtung (13) über das Umlenkteil (9) durch einen Führungsschlitz (7) aus der Schwellerverkleidung (8) herausgeführt ist.

3. Sicherheitsgurtanordnung nach Anspruch 1 oder 2, **dadurch gekennzeichnet, dass** das gurtseitige Kupplungsteil (12) so bemessen ist, dass es beim Zusammenfügen mit dem gurtstrammerseitigen Kupplungsteil (14) durch den Führungsschlitz (7) der Abdeckung (8) führbar ist.

4. Sicherheitsgurtanordnung nach einem der Ansprüche 1 bis 3, **dadurch gekennzeichnet, dass** die Verbindungseinrichtung (13) mittels eines Sperrgliedes (17) in der Betriebsstellung verriegelbar ist.

5. Sicherheitsgurtanordnung nach Anspruch 1, 2, 3 oder 4, **dadurch gekennzeichnet, dass** die stiftförmigen, am Gurtstrammer (16) und am Beckengurtende vorgesehenen Kupplungsteile (12, 14) in zueinander abgewinkelter Position formschlüssig zusammenfügbar und in gestreckter Position verriegelbar sind.

6. Sicherheitsgurtanordnung nach Anspruch 5, **dadurch gekennzeichnet, dass** das Sperrglied eine auf einem Kupplungsteil (12) axial verschiebbare Hülse (17) ist, die in der gestreckten Position der Kupplungsteile (12, 14) auf das zweite Kupplungsteil (14) aufschiebbar ist.

7. Sicherheitsgurtanordnung nach einem der vorhergehenden Ansprüche, **dadurch gekennzeichnet, dass** an den Kupplungsteilen (12, 14) der Bajonettverbindung (13) ein zentrischer, quer zur Längsachse ausgerichteter Führungszapfen (14b) und diametral gegenüber liegende kreissegmentförmige Rastzungen (12c, 14c) angeordnet sind, die mit einer korrespondierenden Lagerbohrung (12b) und mit korrespondierenden schlitzförmigen Führungsnuten (12d, 14d) in der gestreckten Position formschlüssig zusammenwirken.

8. Sicherheitsgurtanordnung nach Anspruch 7, **dadurch gekennzeichnet, dass** die an den Kupplungsteilen (12, 14) angeformten Rastzungen (12c, 14c) zur Ebene der Abflachungen (12a, 14a) abgestuft versetzt sind.

9. Sicherheitsgurtanordnung nach einem der vorhergehenden Ansprüche, **dadurch gekennzeichnet, dass** der Gurtstrammer (16) bei einem viertürigen Kraftfahrzeug seitlich des korrespondierendem Vordersitzes und vor dem Umlenkteil am Schweller angeordnet ist.

10. Sicherheitsgurtanordnung nach einem der Ansprüche 1 bis 8, **dadurch gekennzeichnet, dass** der Gurtstrammer bei einem zweitürigen Kraftfahrzeug hinter dem korrespondierendem Vordersitz und hinter dem Umlenkteil am Schweller angeordnet ist.

## Claims

1. Seatbelt arrangement in motor vehicles, with a seatbelt which is arranged on a vehicle (1) and has a shoulder belt section and a lap belt section (6) which is held at the outer coupling point thereof in the region of a sill (4) of the motor vehicle on a belt tightener (16) which is connected to the lap belt section (6) via a connecting device (13), wherein the connecting device (13) is arranged protected from view under a sill lining (8), **characterized in that** the connecting device (13) is a bayonet connection with a coupling part (12) on the belt and a coupling part (14) on the belt tightener.

2. Seatbelt arrangement according to Claim 1, **characterized in that** a deflecting part (9) is additionally provided protected from view under the sill lining (8), and the lap belt section (6) is led out of the sill lining (8) from the connecting device (13) through a guide slot (7) via the deflecting part (9).

3. Seatbelt arrangement according to Claim 1 or 2, **characterized in that** the coupling part (12) on the belt is dimensioned in such a manner that it is guidable through the guide slot (7) in the covering (8) when being joined to the coupling part (14) on the belt tightener.

4. Seatbelt arrangement according to one of Claims 1 to 3, **characterized in that** the connecting device (13) is lockable in the operating position by means of a blocking element (17).

5. Seatbelt arrangement according to Claim 1, 2, 3 or 4, **characterized in that** the pin-shaped coupling parts (12, 14) provided on the belt tightener (16) and at the end of the lap belt can be joined together in a form-fitting manner in a position angled with respect to each other and are lockable in an extended position.

6. Seatbelt arrangement according to Claim 5, **characterized in that** the blocking element is a sleeve (17) which is axially displaceable on one coupling part (12) and can be pushed onto the second coupling part (14) in the extended position of the coupling parts (12, 14).

7. Seatbelt arrangement according to one of the preceding claims, **characterized in that** a central guide pin (14b) aligned transversely with respect to the longitudinal axis, and latching tongues (12c, 14c), which are located diametrically opposite said guide pin and are in the shape of segments of a circle, are arranged on the coupling parts (12, 14) of the bayonet connection (13), said guide pins and latching tongues interacting in a form-fitting manner with a corresponding guide bore (12b) and with corresponding slot-shaped guide grooves (12d, 14d) in the extended position.

8. Seatbelt arrangement according to Claim 7, **characterized in that** the latching tongues (12c, 14c) which are integrally formed on the coupling parts (12, 14) are offset in a stepped manner with respect to the plane of the flattened portions (12a, 14a).

9. Seatbelt arrangement according to one of the preceding claims, **characterized in that** the belt tightener (16) is arranged to the side of the corresponding front seat and in front of the deflecting part on the sill in the case of a four-door motor vehicle.

10. Seatbelt arrangement according to one of Claims 1 to 8, **characterized in that** the belt tightener is arranged behind the corresponding front seat and behind the deflecting part on the sill in the case of a two-door motor vehicle.

## Revendications

1. Agencement de ceinture de sécurité pour véhicules automobiles, comprenant une ceinture de sécurité disposée dans un véhicule (1) et possédant une section de ceinture diagonale et une section de ceinture abdominale (6) qui est retenue sur un prétensionneur de ceinture (16), au niveau de son point d'articulation extérieur dans la région d'un bas de marche (4) du véhicule automobile, lequel prétensionneur de ceinture est relié à la section de ceinture abdominale (6) par l'intermédiaire d'un dispositif de liaison (13), le dispositif de liaison (13) étant dissimulé sous un revêtement de bas de marche (8), **caractérisé en ce que** le dispositif de liaison (13) est une liaison à baïonnette possédant une pièce d'accouplement du côté de la ceinture (12) et une pièce d'accouplement du côté du prétensionneur de ceinture (14).

2. Agencement de ceinture de sécurité selon la revendication 1, **caractérisé en ce qu**'il est prévu en outre une pièce de renvoi (9) de manière dissimulée sous le revêtement de bas de marche (8), et la section de ceinture abdominale (6) est guidée hors du revêtement de bas de marche (8) à partir du dispositif de liaison (13) par l'intermédiaire de la pièce de renvoi (9) à travers une fente de guidage (7).

3. Agencement de ceinture de sécurité selon la revendication 1 ou 2, **caractérisé en ce que** la pièce d'accouplement du côté de la ceinture (12) est dimensionnée de telle sorte que, lorsqu'elle est jointe à la pièce d'accouplement du côté du prétensionneur de ceinture (14), elle puisse être guidée à travers la fente de guidage (7) du recouvrement (8).

4. Agencement de ceinture de sécurité selon l'une quelconque des revendications 1 à 3, **caractérisé en ce que** le dispositif de liaison (13) peut être verrouillé dans la position de fonctionnement au moyen d'un organe de blocage (17).

5. Agencement de ceinture de sécurité selon la revendication 1, 2, 3 ou 4, **caractérisé en ce que** les pièces d'accouplement (12, 14) en forme de cheville prévues sur le prétensionneur de ceinture (16) et sur l'extrémité dé la ceinture abdominale peuvent être jointes par engagement par complémentarité de formes lorsqu'elles sont en position coudée l'une par rapport à l'autre et peuvent être verrouillées lorsqu'elles sont en position déployée.

6. Agencement de ceinture de sécurité selon la revendication 5, **caractérisé en ce que** l'organe de blocage est une douille (17) qui peut coulisser axialement sur une pièce d'accouplement (12) et qui, dans la position déployée des pièces d'accouplement (12, 14), peut être enfilée sur la deuxième pièce d'accouplement (14).

7. Agencement de ceinture de sécurité selon l'une quelconque des revendications précédentes, **caractérisé en ce que** sur les pièces d'accouplement (12, 14) de la liaison à baïonnette (13) sont disposés un tourillon de guidage (14b) central orienté transversalement à l'axe longitudinal et des languettes d'encliquetage (12c, 14c) en forme de segment de cercle diamétralement opposées qui coopèrent par engagement par complémentarité de formes dans la position déployée avec un alésage de palier (12b) correspondant et avec des rainures de guidage en forme de fente (12d, 14d) correspondantes.

8. Agencement de ceinture de sécurité selon la revendication 7, **caractérisé en ce que** les languettes de verrouillage (12c, 14c) formées sur les pièces d'accouplement (12, 14) sont décalées de manière étagée par rapport au plan des aplatissements (12a, 14a).

9. Agencement de ceinture de sécurité selon l'une quelconque des revendications précédentes, **caractérisé en ce que** le prétensionneur de ceinture (16), dans le cas d'un véhicule automobile à quatre portes, est disposé sur le bas de marche latéralement par rapport au siège avant correspondant et devant la pièce de renvoi.

10. Agencement de ceinture de sécurité selon l'une quelconque des revendications 1 à 8, **caractérisé en ce que** le prétensionneur de ceinture, dans le cas d'un véhicule automobile à deux portes, est disposé sur le bas de marche derrière le siège avant correspondant et derrière la pièce de renvoi.
